# EUROPEAN PATENT APPLICATION

(11) **EP 2 339 272 A1**
(43) Date of publication of application: **29.06.2011**
(21) Application number: 10195095.4
(22) Date of filing: 15.12.2010
(51) Int. Cl.: F25B 49/02, F25B 1/047

(54) **Thermo-frigorific unit and its control method**

(30) Priority: 18.12.2009 IT MI20092236
(71) Applicant: Climaveneta S.p.A., 31100 Treviso (IT)
(72) Inventor: Fadiga', Francesco, 32020 Rivamonte Agordino (Belluno) (IT); Bertoncello, Gianluca, 36061 Bassano del Grappa (Vicenza) (IT)
(74) Representative: Rapisardi, Mariacristina

(57) **Abstract**

In the control method of a polyvalent thermo-frigorific unit with invertible cycle, the thermo-frigorific power supplied by the unit is modulated in response to variations of the ambient climatic conditions and/or of the load absorbed by the user by means of regulations of significant operating parameters of the unit, at least the turning speed of at least one compressor being comprised among the significant operating parameters.

## Description

The present invention refers to a polyvalent thermo-frigorific unit with invertible cycle, and to the relative control method.

It is still widely recognized that a polyvalent thermo-frigorific unit with reversible cycle works in maximum design conditions only for a negligible percentage of its functioning hours.

For this reason tentative are made in these last years in order to improve the efficiency of such units, not only at full-load, but also and mainly at partial loads.

The consumption of the unit is strictly bound to its real capacity of adapting in an effective and efficient way its own thermo-frigorific power to the real demand of the building or of the daily and seasonal process.

The thermo-frigorific polyvalent units with invertible cycle are heat pumps having one exchanger more than the classical heat pumps, and can work alternatively in chiller mode (CH), in heat pump mode (HP) or in chiller and recovery mode together (CH+R), in which an user is continuously supplied with the frigorific energy produced by the evaporator and with the calorific energy produced at the recovery.

The polyvalent thermo-frigorific units with invertible cycle are as such the boundary of the efficiency, as they permit to obtain, when requested, a double useful effect (hot and cold), only with one expenditure in terms of supplied electrical power.

Polyvalent thermo-frigorific units with reversible cycle are today known, having one or more screw compressors which are regulated by modifying the geometry of the suction by means of a slide valve.

This regulation mode of the compressors is scarcely efficient.

In fact, the engine continues to drive the screws with the same speed, even if just one portion of them is utilized for the useful effect, that means for the compression of the refrigerant fluid. The minimum obtainable partialization step is limited and generally equal to 50-55% of the frigorific power.

The intrinsic volumetric ratio of the compressor is generally fixed and does not conform with the compression ratio between the suction and the delivery, determined by the conditions at the border of the plant.

Technical task proposed by the present invention is, therefore, to realize a polyvalent thermo-frigorific unit with invertible cycle and a relative control method, which permit to eliminate the drawbacks lamented in the known art.

Within this technical task, one aim of the invention is to realize a polyvalent thermo-frigorific unit with invertible cycle and a relative control method with a high flexibility of use, in a very efficient and reliable way, and having the maximum efficiency. The technical task, and also these and other aims according to the present invention, are reached by realizing a polyvalent thermo-frigorific unit with invertible cycle and a relative control method according to the independent claims given in the following.

Other features of the present invention are further defined in the subsequent claims.

In accordance with the present invention , the control method of the polyvalent thermo-frigorific unit with invertible cycle, in which the thermo-frigorific power supplied by the unit is modulated in response to variations of the ambient climatic conditions and/or of the load adsorbed by the users by means of a regulation of significant operating parameters of the unit, includes, among such significant operating parameters, at least the turning speed of at least a compressor present in the unit.

The turning speed of the compressor is continuously regulated by means of an inverter.

Preferably the intrinsic volumetric ratio of the compressor is included among such significant operating parameters.

Preferably the intrinsic volumetric ratio is modified, by means of appropriate regulating means, in function of the compression ratio with which the compressor is working.

In the preferred case in which the compressor is of the screw type, the regulating means of the intrinsic volumetric ratio of the compressor comprise a moveable partializing valve.

Further features and advantages of the invention will be more evident from the description of a preferred but not exclusive embodiment of the polyvalent thermo-frigorific unit with invertible cycle and of the corresponding control method according to the finding, illustrated in an indicative and not limiting way in the annexed drawings, in which:

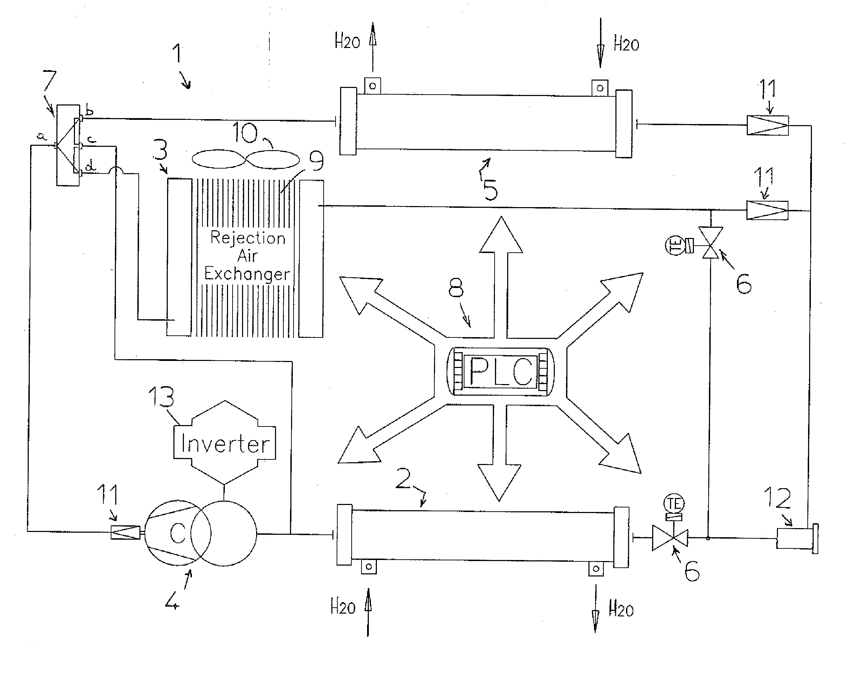

Figure 1 shows a possible layout of the polyvalent thermo-frigorific unit with invertible cycle according to the invention.
With reference to Figure 1, the polyvalent thermo-frigorific unit with invertible cycle 1 comprises an electronic controller 8, particularly a PLC, a first heat exchanger 2 between the primary refrigerant frigorific fluid and a secondary fluid destined to an user, a second so-called recovery exchanger 5 between the primary refrigerant frigorific fluid and a secondary fluid destined to an user, a third heat exchanger 3 between the primary refrigerant frigorific fluid and a secondary fluid, a compressor particularly of the screw type 4 for the compression of the primary fluid, of the lamination valves 6, and an inversion four-way valve 7 a, b, c and d.

Along the circuit of the primary refrigerant frigorific fluid are further present one-way valves 11 and a filter 12.

The first heat exchanger 2 is particularly of water type, the second heat exchanger 3 is particularly of air type and comprises a finned battery 9 provided with at least one fan 10, and the recovery exchanger 5 is also particularly of the water type.

During a CH operation, generally in summer, the unit takes heat from the water - by cooling it for the user - and returns it to the external air by means of the exchanger 3; the water-type exchanger 2 acts as an evaporator and the finned battery 3 as a condenser.

In the HP operation, generally in winter, the unit takes heat from the air by means of the exchanger 3 and transfers it to the water - by heating it for the user; the water type heat exchanger 5 acts as a condenser and the finned batteries 3 as an evaporator.

In the CH+R operation, the unit takes heat from the water of the main circuit - by cooling it for the user and transfer it to the water of the recovery circuit - by heating it for the user; the water-type exchanger 2 acts an evaporator and the recovery exchanger 5 as a condenser.

The operating principle is simple: when the contemporary demand of cold and hot water occurs, the unit 1 takes heat from the room to be cooled and gives it to the room to be heated.

In the unit 1, coupled preferably to a four-tube air conditioning plant, the exchanger 2 always acts as an evaporator by supplying cold water to the user, whereas the recovery exchanger 5 always acts as a condenser by supplying hot water to the user.

What until now explained refers to a classical scheme of a polyvalent thermo-frigorific unit with invertible cycle.

Any polyvalent thermo-frigorific unit with invertible cycle with a scheme different from that shown before is also conceivable and is comprised within the field of the invention.

For example, the same inventive concept of the invention can be applied to a polyvalent thermo-frigorific unit of the type described in the Italian Patent Application nr. MI2009A001056 of which the present Applicant is the owner.

The unit 1 of the invention is in fact substantially characterized by the presence of an inverter 13 able to regulate the turning speed of the compressor 4.

The electronic controller 8 communicates with probes for the detection of one or more operating significant parameters of the unit 1.

Among the operating significant parameters there is at least the turning speed of the compressor 4 which can be controlled by means of the inverter 13 having a frequency converter.

The operating significant parameters can also comprise the temperature, the pressure and the flow rate of the first fluid in the first heat exchanger 2, the temperature, the pressure and the flow rate of the second fluid in the second heat exchanger 3, the temperature, the pressure and the flow rate of the fluid in the recovery exchanger 5, the rate, the temperature and the pressure of the refrigerant in significant areas of the circuit, the electric absorption of an electro-mechanic organ of the unit, the oil concentration in the refrigerant.

The electronic controller 8 by means of suitable probes is also able to detect the ambient conditions (for example temperature, pressure and atmospheric humidity).

The electronic controller 8 dialogues and interacts with the logic present in the inverter 13 and monitors all the significant operating parameters.

The capacity of continuously controlling in a self-adaptive way the significant operating parameters permits to optimize the performances according to the ambient conditions and the real needs of the user.

From the provision of a regulation of the compressor 4 by means of the inverter 13 various advantages derive.

It is possible to continuously modulate in an extended range (i.e. from 90 to 20 Hz) with a minimal partialization step of approx. 20% of the thermo-frigorific power.

The improved capacity of controlling the delivery temperatures to the plant entails a greater comfort for the user, by limiting the starting operations of the compressor and the fan.

The unit 1 is adapted in a more efficient and punctual way to the variability of the load (demand of hot, cold or simultaneous hot and cold temperature) and of the ambient conditions (temperature and humidity of air).

The efficiency at the partial loads is optimized and results in a lower consumption of primary energy and a subsequent CO₂-emission.

A further improvement of the efficiency can be obtained by introducing among the operating significant controllable parameters the volumetric intrinsic ratio of the compressor 4 according to the boundary conditions, that is of the compression ratio with which the compressor 4 has to work.

This, together with the continuous variation of the revolutions of the compressor 4, is particularly important in a polyvalent unit, taking into account the wide and diversified working field in which it is working during the year or also during a single day.

The regulating means of the intrinsic volumetric ratio of the screw compressor 4 can comprise a traditional moveable partializing valve (not shown).

From the point of view of its electric characteristics, the unit 1 eliminates inrush currents and provides a power factor near to unity. This entails a strong reduction of the electric stresses and optimal conditions for the electric supply make it unusable the addition of costly power factor correction systems.

The unit 1 is also able to attain a more correct distribution of the loads between hot and cold temperatures, a more rapid and efficient commutation from a operating state to the other, a greater flexibility in case of variations to the plant regulation logic, a better control of the defrosting, a better control of the driving and of the oil return to the compressor, a lesser acoustic impact mainly at partial loads (referring for example to the night working).

A typical example for regulating the unit 1 is the following.

For any operating regime the electronic controller 8 controls the heat load of the users, the absorption of the compressor 4 and of the fan 10, and detects, according to the atmospheric conditions (temperature and air humidity), the rotation regime of the fan 10 and the optimal frequence of the compressor 4, in order to guarantee that the heat loads are attained with the lowest possible consumption. This is mainly possible due to the logic present in the inverter 13 supplying the compressor 4.

If for example in the chiller mode the temperature of the water produced to the cold exchanger 2 raises above the set-point, the electronic controller 8 controls the frequence of the inverter 13, the rotation regime of the fan 10, the air temperature, the evaporation and condensation temperatures, the overheating and the under-cooling and detects, by means of a comparison with its own internal maps, how much to increase the frequence of the compressor 4, the rotation regime of the fan 10 and the opening of the electronic thermostatic valve, in order to guarantee the heat load with the lowest possible consumption.

During the defrosting operations, needed for cleaning the ice formed from the battery 9 during the HP operation in winter, the use of the inverter 13 permits to control more precisely the inversion cycle phases and the trend of the pressures in the circuit, by reducing to a minimum such phase with a complete advantage in the continuity of the water supplied to the users and in the general efficiency of the system.

Being able to control more precisely the water produced minimizes the on-off switching phases of the compressors and the fans, and permits a more continuous and efficient operation to the terminals of the user.

The polyvalent thermo-frigorific unit with invertible cycle and the relative control method so conceived are susceptible of various modification and variations, all within the inventive concept; furthermore, all the details can be substituted by technically equivalent elements.

In practice the used materials, and also their sizes, can be of any kind according to the needs and the state of the art.

## Claims

1. A polyvalent thermo-frigorific unit (1) with invertible cycle comprising at least a compressor (4), a first water type heat exchanger (2), a second air type heat exchanger (3), and a water type recovery exchanger (5), **characterized in that** it comprises an inverter (13) for continuously regulating the turning speed of said at least one compressor (4).

2. The polyvalent thermo-frigorific unit (1) with invertible cycle according to claim 1, **characterized in that** said at least one compressor (4) is of the screw type.

3. The polyvalent thermo-frigorific unit (1) with invertible cycle according to one or more preceding claims, **characterized in that** it has regulating means of the intrinsic volumetric ratio of said at least one compressor (4).

4. The polyvalent thermo-frigorific unit (1) with invertible cycle according to the preceding claim, **characterized in that** said regulating means of the intrinsic volumetric ratio of said at least one compressor (4) comprise a moveable partializing valve.

5. A control method of a polyvalent thermo-frigorific unit (1) with invertible cycle, in which the thermo-frigorific power supplied by said unit (1) is modulated in response to variations of the ambient climatic conditions and/or of the load absorbed by the user by means of a regulation of significant operating parameters of said unit (1), **characterized in that** it comprises, among said significant operating parameters, at least the turning speed of at least one compressor (4) present in said unit (1).

6. The control method of a polyvalent thermo-frigorific unit (1) with invertible cycle according to the preceding claim, **characterized in that** the turning speed of at least one compressor (4) is continuously regulated by means of an inverter (13).

7. The control method of a polyvalent thermo-frigorific unit (1) with invertible cycle according to one or more preceding claims, **characterized in that** it comprises, among said significant operating parameters, also the intrinsic volumetric ratio of at least one compressor (4).

8. The control method of a polyvalent thermo-frigorific unit (1) with invertible cycle according to the preceding claim, **characterized in that** intrinsic volumetric ratio is modified in function of the compression ratio with which said at least one compressor (4) has work.

9. The control method of a polyvalent thermo-frigorific unit (1) with invertible cycle according to one or more preceding claims, **characterized in that** said at least one compressor (4) is of the screw type.

10. A combination of unit as claimed in any claim 1 to 4 and a four-tube air conditioning plant coupled to said unit, wherein said first exchanger (2) always acts as an evaporator by supplying cold water to the user, whereas said recovery exchanger (5) always acts as a condenser by supplying hot water to the user.
